## Europäisches Patentamt
## European Patent Office
## Office européen des brevets

(19)

(11) Veröffentlichungsnummer : **0 211 286**
**B1**

(12) **EUROPÄISCHE PATENTSCHRIFT**

(45) Veröffentlichungstag der Patentschrift :
23.11.89

(21) Anmeldenummer : 86109756.6

(22) Anmeldetag : 16.07.86

(51) Int. Cl.⁴ : **B 23 K   1/12**

(54) Einrichtng zum maschinellen Verbinden von Stiften mit einer Verbindungsplatte.

(30) Priorität : 29.07.85 DE 3527148

(43) Veröffentlichungstag der Anmeldung :
25.02.87 Patentblatt 87/09

(45) Bekanntmachung des Hinweises auf die Patenterteilung : 23.11.89 Patentblatt 89/47

(84) Benannte Vertragsstaaten :
AT CH FR GB IT LI

(56) Entgegenhaltungen :
DD–A–   147 068
DE–A– 1 427 131
DE–A– 2 306 229
DE–U– 7 507 513
US–A– 1 991 582
US–A– 1 996 131
US–A– 3 515 330
US–A– 4 431 465
PATENT ABSTRACTS OF JAPAN, Band 9, Nr. 124 (M-383)[1847], 29. Mai 1985
PATENT ABSTRACTS OF JAPAN, Band 5, Nr. 65 (M-66)[737], 30. April 1981
E. LÜDER "Handbuch der Löttechnik", 1952, Seite 318, Verlag Technik Berlin;

(73) Patentinhaber : **Zettl, Friedrich**
**Ettlinger Strasse 37**
**D-7531 Keltern (DE)**

(72) Erfinder : **Zettl, Friedrich**
**Ettlinger Strasse 37**
**D-7531 Keltern (DE)**

(74) Vertreter : **Trappenberg, Hans**
**Postfach 1909**
**D-7500 Karlsruhe 1 (DE)**

## Beschreibung

Die Erfindung betrifft eine Einrichtung zum maschinellen Flammlöten von Stiften an eine Verbindungsplatte eines Gegenstandes, insbesondere zum Verbinden des Stiftes eines Ohrteckers mit dessen Schmuckteil.

Das Verbinden von Stiften mit Gegenständen, die eine Verbindungsplatte aufweisen, auf die dieser Stift aufgesetzt werden muß, ist zwar eine, handwerklich gesehen, recht einfache Arbeit, die jedoch dann sehr schwierig wird, wenn sie maschinell, um diese Verbindung möglichst preiswert herstellen zu können, erfolgen muß. Dies insbesondere dann, wenn es sich bei den Gegenständen um Schmuckstücke handelt, wie beispielsweise um Ohrstecker, wobei nicht nur die Form dieser Gegenstände Schwierigkeiten bereitet, sondern auch das Material, aus dem diese Gegenstände beziehungsweise der aufzusetzende Stift bestehen. Bei den Schmuckstücken ist außerdem noch zu beachten, daß sie durch das Verbindung der Teile nicht beschädigt beziehungsweise in ihrem Aussehen nicht beeinträchtigt werden dürfen. In kleinen Stückzahlen benötigte Schmuckstücke dieser Art werden daher nach wie vor noch von Hand bearbeitet, also der Stift im allgemeinen auf die Verbindungsplatte des Gegenstandes aufgelötet.

Zwischen dem Stift eines Ohrsteckers und dessen Schmuckteil zur maschinellen Herstellung einer Verbindung sind bis jetzt zwei Verfahren bekannt :

1. Das Aufschweißen des Stiftes auf die Verbindungsplatte,

2. das Auflöten, wobei die Erwärmung der Gegenstände wie auch des Lots durch eine Induktionsschleife erfolgt.

Das Schweißen ist eine relativ einfache Technik, die sich bereits auf vielen Sektoren bewährt hat. Allerdings setzt diese Verbindungsart voraus, daß es sich bei den beiden zu verbindenden Partnern um schweißfähige Materialien handelt, daß die Materialpaarung also das Schweißen erlaubt. Weitere Voraussetzung ist, daß der Schweißstrom in die zu verbinden Teile eingeleitet werden kann, und auch, daß die Verbindung so erfolgt, daß sie ansehnlich ist. Schon jedoch das Einleiten des Stromes in die zu verbindenden Schmuckteile bereitet Schwierigkeiten, da bereits der Kleinste Luftspalt zwischen der stromführenden Elektrode und dem Schmuckteil zum Spratzen und damit zu einer Beschädidung der Oberfläche des Schmuckteils oder des Stiftes führt. Weiter ist auch ein Spratzen an der Verbindungsstelle zwischen Stift und Verbindungsplatte nicht auszuschließen, wodurch die Schweißstelle unansehnlich wird, also Ausschuß entsteht. Um diese Nachteile soweit wie möglich zu verneiden, sind für jede Gegenstandsform jeweils anzufertigende Werkzeuge, die aus Elektrodenmaterial bestehen müssen, notwendig, was nur bei sehr großen Stückzahlen wirtschaftlich vertretbar ist. Trotzdem ist Spratzen an der Verbindungsstelle und die damit verbundene unschöne Verbindungsart kaum zu vermeiden. Diese Verbindung kann daher nur für geringwertige Schmuckstücke beziehungsweise in diesem Falle Ohrstecker und auch nur für sehr große Stückzahlen wirtschaftlich vertretbar eingesetzt werden.

Beim Induktionslöten müssen diz zu verbindenden Teile unter Zwischenlage eines Lots durch eine HF-Induktionsschleife erwärmt werden, was bei jeder Gegenstandsform ein separat anzufertigendes, recht teures Werkzeug bedingt. Auch das Zu- und Abführen der gelöteten Teile ist, bedingt durch die Werkzeugform, bei der die zu verbindenden Gegenstände ja von der Schleife umfaßt werden müssen, recht schwierig. Auch hier gilt daher, daß eine derartige Induktionslösung nur unter Einsatz spezieller Apparaturen, Einrichtungen und insbesondere schwierig herzustellender und damit teurer Werkzeuge durchgeführt werden kann.

Dem Stande der Technik ist auch noch das schonende Verbindungsverfahren durch Flammlöten zuzuzählen, wie die beispielsweise durch die US-A-19 91 582, die DD-A-147 068 und die US-A-19 96 131 gelehrt wird. Bei diesem Verbindungsverfahren werden die zu verbindenden Teile zusammengefügt und unter Beigabe von Lot miteinander im Wege des Flammlötens verlötet. Hierbei werden die Teile nacheinander der Lötstelle zugeführt und dort durch eine oder mehrere Lötflammen erhitzt. Das Lot kann hierbei bereits auf die zu verbindenden Teile aufgelegt oder erst beim Erwärmen der Teile zugeführt werden. Bei diesen, in den Vorveröffentlichungen angeführten, zu verbindenden Teile handelt es sich jedoch nicht am äußerst emfpindliche Schmuckstücke, die mit einem Stift zu versehen sind, sondern um größere technische Teile, die rohr- oder plattenförmig und damit verhältnismäßig einfach zu manipulieren sind.

Die DE-A-23 06 229 zeigt, wie eine Lötmittelraupe zur Herstellung einer Verglasungseinheit durch verflüssigtes Lot hergestellt weden kann. Auch hier handelt es sich allerdings um das Verbinden verhältnismäßig großer, flächiger Teile, wenn auch das Herstellen dieser Lötmittelraupe, um ihr ein ästhetisch ansprechendes Aussehen zu geben, verhältnismäßig schwierig ist. Schließlich zeigt auch noch die US-A-44 31 465 die Möglichkeit, pastöses Lot bei derartigen Verbindungen einzusetzen.

Die Erfindung hat sich die Aufgabe gestellt, eine Einrichtung zum maschinellen Verbinden von Stiften mit eine Verbindungsplatte aufweisenden Gegenständen, insbesondere zum verbinden des Stiftes eines Ohrsteckers mit dessen Schmuckteil, anzugeben, das im Wege des Flammlötens auf den Einsatz aufwendig herzustellender und daher teurer Werkzeuge verzichten kann, das auch wirtschaftlich, insbesondere auch für kleine Serien wirtschaftlich einzusetzen ist.

Hierzu wird nach der Erfindung vorgeschlagen, daß die die Verbindungsplatte des Gegenstandes mit der Lötfläche horizontal nach oben einer Lötstelle zugeführt wird, daß sodann zweckmäßigerweise von seitlich/oben über einen Lötzylinder pastöses Lot auf die Lötstelle aufgebracht wird, daß daran anschließend der Stift in vertikaler Lage von oben zugeführt und sodann die Lötflamme von der Seite her an die Lötstelle herangebracht wird, wozu auf einer Maschinen-Grundplatte eine zur Lötstelle führende Zuführeinrichtung für die zu verlötende erbindungsplatte des Gegenstandes, ein den Lötzylinder zur Lötstelle führender Schieber, eine den Stift senkrecht von oben an die Lötstelle führende Zuführ- und Halteeinrichtung sowie eine außerhalb der Führung des Schiebers liegende Führungseinrichtung für die Düse der Lötflamme angebracht sind.

Nicht mehr also wie bisher wird die maschinelle Verbindung durch Schweißen oder Induktionslöten hergestellt, sondern durch das altbekannte Flammlöten. Das Flammlöten ist im Gegensatz zu den besprochenen bekannten Verbindungsarten nicht an ein spezielles Werkzeug gebunden, sondern bedingt allenfalls eine Aufnahme für den mit dem Stift zu verbindenden Gegenstand. Hervorzuheben ist, daß dieses Flammlöten auch eine deutlich bessere Verbindung ergibt, als beispielsweise das Hochfrequenzlöten oder auch das Löten mit Lötblech. Dies rührt daher, daß das Lot an dem Stift hochkriecht, also kegelförmig die Verbindung zwischen dem Stift und der Platte den Stift umgibt und daher eine äußerst feste Verbindung bewirkt. Allerdings setzt es voraus, daß sowohl der mit dem Stift zu verbindende Gegenstand, wie auch der Stift selbst während des Lötvorganges exakt an der Lötstelle gehalten wird. Die Halterung dieser zu verlötenden Teile erfordert jedoch nicht den Einsatz teurer Werkzeuge, sondern kann im einfachsten Falle durch eine Auflagemulde beziehungsweise durch eine Dreibackenzange etc. für den Stift gebildet werden. Die Werkzeugkosten sind also minimal, so daß auch verhältnismäßig kleine Stückzahlen derartiger Ohrstecker etc. auf wirtschaftliche Art und Weise auf einem solchen Automaten hergestellt werden können. Vergleicht man diese wirtschaftliche Herstellmöglichkeit mit der zuvor notwendigen manuellen Herstellung, so ergibt sich eine außerordentliche Senkung der Herstellkosten, mithin also auch die Möglichkeit, Kleinserien derartiger Schmuckstücke etc. herzustellen und mit angemessenen Gewinn zu verkaufen.

Die Zuführeinrichtung kann hierbei ein einfacher Schiebesockel sein, auf dem eine halterung für die Gegenstände angebracht ist, der nach dem Einlegen der Gegenstände an Anschläge auf der Maschinenplatte herangeführt wird und somit die Gegenstände exakt an der Lötstelle fixiert. Mit Vorteil wird, insbesondere bei größeren Stückzahlen, als Zuführeinrichtung eine auf der Maschinen-Grundplatte in zwei Endlagen verschiebbare Schiebeplatte eingesetzt, die beidseits mit Halterungen zur Aufnahme der Gegenstände versehene Sockel trägt. Es kann mit dieser Schiebeplatte auf der einen Seite der Gegenstand eingelegt werden, während auf der anderen Seite die Lötung durchgeführt wird. Ist die Lötung beendet, wird die Schiebeplatte in die andere Extremlage verschoben, der bereits gelötete Gegenstand entnommen und ein neuer eingelegt, während jenseits wiederum die Lötung erfolgt.

Selbstverständlich ist ohne weiteres auch der Einsatz eines Rundtisches denkbar, bei dem auf der einen Seite eingelegt und auf der anderen Seite die Fertigen Artikel entnommen werden können.

Zum Bewegen all dieser Teile empfiehlt es sich, daß hierfür Pneumatikzylinder Verwendung Finden, die zweckmäßgerweise über eine Nockensteuerung angesteuert werden.

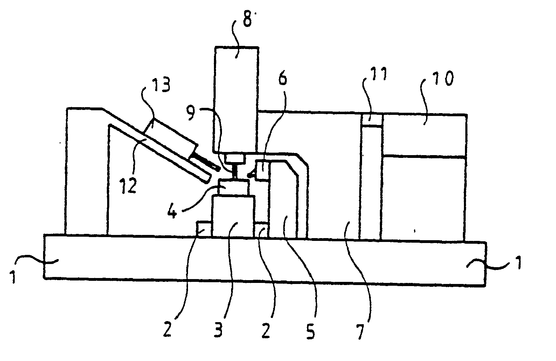

Auf der Zeichnung ist schematisch eine Einrichtung nach der Erfindung dargestellt. Auf einer Maschinen-Grundplatte 1 sind Anschläge 2 vorgesehen, in die ein Schiebesockel 3 mit einer Aufnahme 4 für die zur verlötenden Gegenstände eingeschoben ist. Auf der gleichen Grundplatte ist eine Führungseinrichtung 5 für die Düse 6 einer Lötflamme angebracht, an der die Düse längs gleiten kann, also in der gezeigten Darstellung senkrecht zur Zeichenebene verschiebbar ist.

Weiter auf der Maschinen-Grundplatte 1 angebracht ist eine Halterung 7 für eine Zuführ- und Halteeinrichtung 8 für die auf die Gegenstände aufzulötenden Stifte 9. Verbunden mit dieser Zuführ- und Halteeinrichtung ist eine Selektiereinrichtung 10, die die Stifte lagegerecht über einen Kanal 11 der Zuführ- und Halteeinrichtung 8 zuführt. Leftztlich befindet sich auf der Maschinen-Grundplatte 1 auch noch eine schräggestellte Gleitschiene mit Schieber 12, auf der ein Lötzylinder 13 verfahren werden kann.

Beim Betrieb dieser Einrichtung wird der Sockel 3 an die Anschläge 2 auf der Maschinen-Grundplatte 1 geführt, so daß sich der durch die Halterung 4 gehaltene Gegenstand an der Lötstelle befindet. Sodann wird der Lötzylinder 13 mittels des Schiebers 12 soweit verschoben, daß pastöses Lot auf die Lötstelle aufgebracht werden kann. Der Lötzylinder 13 geht sodann wieder in seine Endlage zurück. Über die Selektiereinrichtung 10 werden die in ihr befindlichen Stifte 9 über den Kanal 11 der Zuführ- und Halteeinrichtung 8 zugeführt und durch diese Einrichtung (8) lagegerecht auf den mit den Stiften 9 zu verbindenden Gegenstand aufgesetzt. Sodann wird die Düse 6 der Flamme auf der Führungseinrichtung 5 an die Lötstelle hin verschoben, so daß die Lötstelle erwärmt wird und das Lot zum Fließen bringt. Danach wird die Düse 6 auch wiederum in die Endlage verfahren. Es kann nunmehr nach durchführter Lötung der Sockel 3 weggenommen und das fertig gelötete Stück entnommen werden. Der Vorgang wiederholt sich sodann in der beschriebenen Weise.

**Patentansprüche**

1. Einrichtung zum maschinellen Flammlöten von einem Stift an eine Verbindungsplatte eines Gegenstandes, insbesondere zum Verbinden des Stifts eines Ohrsteckers mit dessen Schmuckteil.

Wobei die Verbindungsplatte des Gegenständes mit der Lötfläche horizontal nach oben einer Lötstelle zugeführt wird, dann zweckmäßigerweise von seitlich/oben über einen Lötzylinder (13) pastöses Lot auf die Lötstelle aufgebracht wird, daran anschließend der Stift (9) in vertikaler Lage von oben zugeführt und dann die Lötflamme von der Seite her an die Lötstelle herangebrach wird, wozu auf einer Maschinen-Grundplatte (1) eine zur Lötstelle führende Zuführeinrichtung (3) für die zu verlötende verbindungsplatte des Gegenstandes, ein den Lötzylinder (3) zur Lötstelle führender Schieber (12), eine den Stift (9) senkrecht von oben an die Lötstelle führende Zuführund Halteeinrichtung (8) sowie eine außerhalb der Führung des Schiebers (12) liegende Führungsreinrichtung (5) für die Düse (6) der Lötflamme angebracht sind.

2. Einrichtung nach Anspruch 1, dadurch gekennzeichnet, daß die Zuführeinrichtung ein Schiebesockel (3) ist, daß der Gegenstand in einer auf dem Schiebesockel (3) angebrachte Halterung (4) einlegbar und der Schiebesockel (3) an die korreke Lage der Löstelle sichernde Anschläge (2) heranführbar ist.

3. Einrichtung nach Anspruch 1, dadurch gekennzeichnet, daß die Zuführeinrichtung (3) eine auf der Maschinen-Grundplatte (1) in zwei Endlagen verschiebbare Schiebeplatte ist, die beidseits mit Halterungen zur Aufnahme der Gegenstände versehene Sockel trägt.

4. Einrichtung nach Anspruch 1, dadurch gekennzeichnet, daß an den zu verschiebenden Konstruktionsteilen Pneumatikzylinder angebracht sind.

5. Einrichtung nach Anspruch 4, dadurch gekennzeichnet, daß die Steuerung der Pneumatikzylinder über eine Nockensteuerung erfolgt.

## Claims

1. An apparatus for machine flame soldering of pins to a connecting plate of an article, in particular for connecting the pin of an earring to the decorative portion thereof, wherein the connecting plate of the article is fed to a soldering location with the soldering surface horizontally upwardly, then pasty solder is desirably applied to the soldering location from the side/above by way of a soldering cylinder (13), that then the pin (9) is fed in a vertical position from above and then the soldering flame is brought to the soldering location from the side, for which purpose mounted on a machine base plate (1) are a feed means (3) leading to the soldering location for the connecting plate of the article to be soldered, a slide (12) leading the soldering cylinder (13) to the soldering location, a feed and holding means (8) for leading the pin (9) perpendicularly from above to the soldering location and a guide mans (5) for the nozzle (6) of the soldering flame, which guide means is disposed outside the guide of the slide (12).

2. Apparatus according to claim 1 characterised in that the feed means in a sliding support (3), that the article can be fitted in a holder (4) which is mounted on the sliding support (3) and the sliding support (3) can be moved into contact with abutments (2) which ensure correct positioning of the soldering location.

3. Apparatus according to claim 1 characterised in that the feed means (3) is a sliding plate which is displaceable on the machine base plate (1) into two limit positions and which carries supports provided on both sides with holders for receiving the articles.

4. Apparatus according to claim 1 characterised in that pneumatic cylinders are disposed on the structural members to be displaced.

5. Apparatus according to claim 4 characterised in that the pneumatic cylinders are controlled by way of a cam control.

## Revendications

1. Dispositif pour braser à la machine au moyen d'une flamme une tige sur une plaque de liaison d'un objet, en particulier pour lier la tige d'une boucle d'oreille à sa partie décorative, dans lequel la plaque de liaison de l'objet est amenée à un endroit de brasage, la surface de brasage étant horizontale et tournée vers le haut, de la brasure pâteuse est ensuite amenée de préférence de côté ou d'en haut sur l'endroit du brasage par un cylindre de brasure (13), la tige (9) est amenée immédiatement après depuis le haut en position verticale, et la flamme de brasage est alors approchée de l'endroit du brasage depuis le côté, cependant que, sur une plaque de base (1) de la machine, sont montés à cette fin un dispositif d'amenée (3) de la plaque de liaison de l'objet à braser conduisant à l'endroit du brasage, un coulisseau (12) conduisant le cylindre de brasure (13) à l'endroit du brasage, un dispositif d'amenée et de retenue (8) amenant la tige (9) verticalement depuis le haut à l'endroit du brasage, ainsi qu'un dispositif de guidage (5) qui est destiné à la buse (6) de la flamme de brasage et qui est situé à l'extérieur du guidage du coulisseau (12).

2. Dispositif selon la revendication 1, caractérisé par le fait que le dispositif d'amenée est un socle coulissant (3), et par le fait que l'objet peut être déposé dans une fixation (4) montée sur le socle coulissant (3) et que le socle coulissant (3) peut être déplacé contre des butées (2) qui assurent la position correcte de l'endroit du brasage.

3. Dispositif selon la revendication 1, caractérisé par le fait que le dispositif d'amenée (3) est une plaque coulissante qui peut être amenée en deux positions finales sur la plaque de base (1) de la machine et qui porte des socles munis des deux côtés de fixation pour recevoir les objets.

4. Dispositif selon la revendication 1, caractérisé par le fait que des vérins pneumatiques sont montés sur les parties de la machine qui doivent être déplacées.

5. Dispositif selon la revendication 1, caractérisé par le fait que la commande des vérins pneumatiques a lieu par l'intermédiaire d'une commande à cames.